(19) Europäisches Patentamt
European Patent Office
Office européen des brevets

(11) **EP 3 091 657 B1**

(12) **EUROPEAN PATENT SPECIFICATION**

(45) Date of publication and mention
of the grant of the patent:
**01.08.2018 Bulletin 2018/31**

(51) Int Cl.:
***H02S 50/00*** (2014.01)

(21) Application number: **14876669.4**

(22) Date of filing: **30.12.2014**

(86) International application number:
**PCT/CN2014/095529**

(87) International publication number:
**WO 2015/101282 (09.07.2015 Gazette 2015/27)**

(54) **PHOTOVOLTAIC STRING FAULT IDENTIFICATION METHOD, APPARATUS AND SYSTEM**

VERFAHREN, VORRICHTUNG UND SYSTEM ZUR FEHLERIDENTIFIKATION BEI FOTOVOLTAIK-STRINGS

PROCÉDÉ D'IDENTIFICATION D'ANOMALIE DE CHAINE PHOTOVOLTAÏQUE, APPAREIL ET SYSTÈME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.12.2013 CN 201310755460**

(43) Date of publication of application:
**09.11.2016 Bulletin 2016/45**

(73) Proprietor: **Sungrow Power Supply Co., Ltd.**
**Hefei, Anhui 230088 (CN)**

(72) Inventors:
• **NI, Hua**
  **Hefei**
  **Anhui 230088 (CN)**
• **CHEN, Juan**
  **Hefei**
  **Anhui 230088 (CN)**
• **YU, Yanfei**
  **Hefei**
  **Anhui 230088 (CN)**
• **YANG, Zongjun**
  **Hefei**
  **Anhui 230088 (CN)**

(74) Representative: **Zacco Patent- und Rechtsanwalts GmbH**
**Am Wall 187-189**
**28195 Bremen (DE)**

(56) References cited:
WO-A1-2012/159652     WO-A1-2013/004295
WO-A1-2013/170422     CN-A- 102 638 197
CN-A- 103 701 410     US-A1- 2012 247 542

• FENG, BAOCHENG ET AL.: 'Research on Model and Simulation of PV Module under Partially Shaded Conditions' ELECTRIC DRIVE vol. 7, no. 41, 31 July 2011, XP008184064
• ZHANG, XUESHAN ET AL.: 'Discrimination on False Inflection Point of Curves' JOURNAL OF SHANGHAI UNIVERSITY OF ENGINEERING SCIENCE vol. 4, no. 24, 31 December 2010, page 314, XP008184068
• CHAI, YAPAN ET AL.: 'Simulation Study of PV Modules under Partial Shading' EAST CHINA ELECTRIC POWER vol. 2, no. 41, 28 February 2010, XP008184066
• FU, WANG ET AL.: 'Research on PV Array Mathematical Model under Partial Shading' COMPUTER SIMULATION vol. 7, no. 30, 31 July 2013, XP008184063

## Description

The present application claims the priority to Chinese Patent Application No. 201310755460.0, entitled "PHOTOVOLTAIC STRING FAULT IDENTIFICATION METHOD, APPARATURS AND SYSTEM", filed on December 31, 2013 with the State Intellectual Property Office of the People's Republic of China.

## FIELD

The present application relates to the field of photovoltaic power generation technology, and more particularly to a method, apparatus and system for identifying a fault of a photovoltaic string. The document WO2013/170422A discloses method to detect faults in photovoltaic installations.

## BACKGROUND

Recent years, solar photovoltaic industry develops by leaps and bounds. Technologies such as photovoltaic modules, photovoltaic inverters and photovoltaic grid-connection develop rapidly. A photovoltaic array formed by connecting several photovoltaic modules in a series-parallel way, as a power source of a photovoltaic power generation system, plays a quite important role in the photovoltaic power generation system.

Characteristics of photovoltaic modules are easily affected by illumination and temperature. In practical production, there are a lot of elements affecting illumination and temperature in objective environment. Photovoltaic modules in fault, such as photovoltaic modules with illumination shielded, modules with a fault of potential induced degradation (PID), and modules with attenuation to some extent, are common in the scene of a practical power station, which can cause power loss of a system and bring direct economy loss to users.

Currently, monitoring and maintenance of photovoltaic modules in a photovoltaic power station mainly depend on periodical inspection by workers in the scene of the power station. This method has a high labor cost, a heavy workload and a low efficiency. In addition, a fault alarm is usually installed behind a combiner box. When a fault occurs, workers must detect several photovoltaic modules in parallel in front of the combiner box one by one to find out the module in fault. This detection method has some blindness and a low efficiency.

## SUMMARY

In view of above, the application provides a method, apparatus and system for identifying a fault of a photovoltaic string, to solve the problems of heavy workload and low efficiency caused by monitoring photovoltaic modules manually in conventional technology.

In order to achieve above objectives, technical solutions of the application are provided as follows.

A method for identifying a fault of a photovoltaic string as recited in claim 1 and an apparatus as recited in claim 6 are the embodiments of the present invention. Further advantageous embodiments are recited in the dependent claims.

From the above technical solutions, compared with the conventional technology, a method for identifying a fault of a photovoltaic string is provided by the application. A present characteristic curve of each string is determined firstly, and then a slope of a tangent line of each point on the present characteristic curve is determined and a difference between the slopes of the tangent lines of any two adjacent points is calculated. Then it is judged whether an absolute value of the difference is less than a first preset value. In a case that the absolute value is less than the first preset value, it is determined that the string is in a first working state. In a case that the absolute value is not less than the first preset value, it is determined that the string is in a second working state. The first working state includes a normal working state and the second working state includes a fault state. Thus, with the method for identifying the fault of the photovoltaic string provided by this application, it can be automatically determined whether a fault occurs in each string and thus a fault degree, thereby effectively solving the problems of heavy workload and low efficiency caused by monitoring photovoltaic modules manually in conventional technology.

## BRIEF DESCRIPTION OF THE DRAWINGS

In order to describe technical solutions in embodiments of the present application or the conventional technology more clearly, hereinafter drawings to be used in the description of the embodiments or the conventional technology are introduced simply. Apparently, the drawings described below only describe some embodiments of the present application. Those skilled in the art can obtain other drawings based on these drawings without any creative work.

Figure 1 is a flowchart of a method for identifying a fault of a photovoltaic string provided by an embodiment of the present application;

Figure 2 is another flowchart of a method for identifying a fault of a photovoltaic string provided by an embodiment of the present application;

Figure 3 is another flowchart of a method for identifying a fault of a photovoltaic string provided by an embodiment of the present application;

Figure 4 is another flowchart of a method for identifying a fault of a photovoltaic string provided by an embodiment of the present application;

Figure 5 is another flowchart of a method for identifying a fault of a photovoltaic string provided by an embodiment of the present application;

Figure 6 is a schematic structural diagram of an apparatus for identifying a fault of a photovoltaic string provided by an embodiment of the present application;

Figure 7 is another schematic structural diagram of an apparatus for identifying a fault of a photovoltaic string provided by an embodiment of the present application;

Figure 8 is another schematic structural diagram of an apparatus for identifying a fault of a photovoltaic string provided by an embodiment of the present application;

Figure 9 is another schematic structural diagram of an apparatus for identifying a fault of a photovoltaic string provided by an embodiment of the present application; and

Figure 10 is another schematic structural diagram of an apparatus for identifying a fault of a photovoltaic string provided by an embodiment of the present application.

## DETAILED DESCRIPTION OF EMBODIMENTS

Technical solutions of embodiments of the present application will be described clearly and completely below in conjunction with the drawings of the embodiments of the application. Apparently, the described embodiments are some rather than all of the embodiments of the present application. Any other embodiments obtained based on the embodiments of the present application by those skilled in the art without any creative work fall within the scope of protection of the present application.

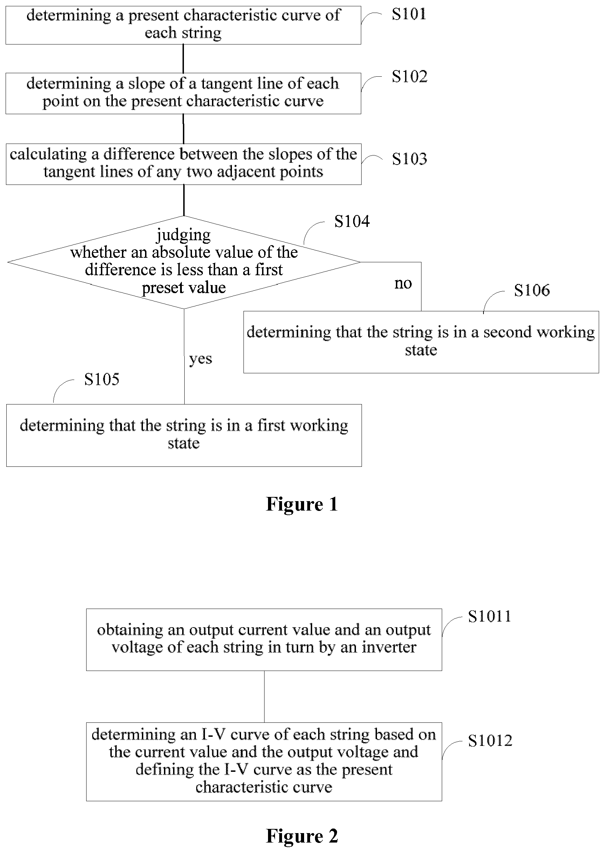

Reference is made to figure 1 which is a flowchart of a method for identifying a fault of a photovoltaic string provided by an embodiment of the present application. The method includes step S101 to step S106.

In S101, a present characteristic curve of each string is determined.

In S102, a slope of a tangent line of each point on the present characteristic curve is determined.

In S103, a difference between the slopes of the tangent lines of any two adjacent points is calculated.

In S104, it is judged whether an absolute value of the difference is less than a first preset value. Step S105 is executed if the absolute value is less than the first preset value, and step S106 is executed if the absolute value is not less than the first preset value.

In S105, it is determined that the string is in a first working state.

In S106, it is determined that the string is in a second working state. The first working state includes a normal working state and the second working state includes a fault state.

It should be noted that, among multiple faults of an inverter, shielding fault is a most common fault and a fault with the most obvious feature for a photovoltaic array. Therefore, shielding determination is the main content of fault determination.

Whether there is a shielding fault for the string may be determined by determining whether there is a "step" (or referred to as "corner") in the curve of the string in this step. A fault type is determined initially based on severity of the fault. If the fault leads to a phenomenon not fitting a shielding feature, it is considered that a fault of another type occurs in the system.

A method for determining whether there is a "step" or a "corner" is provided by the embodiment, which comprises:

judging slopes of tangent lines of two adjacent points. In a case that there is a sudden change in amplitude between the two slopes of the tangent lines, and it is supposed that the slope for the first point is $k_1$, $k_1 < 0$ and $k_1 \to -\infty$, the slope for the second point is $k_2$, $k_2 < 0$ and $k_2 \to 0$, in this case, $k_1 << k_2$, that is, the difference between the two slopes is large, it is considered that a "corner" exists and thus it is determined that a shielding fault occurs in the string.

Therefore, with the method for identifying the fault of the photovoltaic string provided by this application, whether a fault occurs in each string can be automatically determined, thereby effectively solving the problems of heavy workload and low efficiency caused by monitoring photovoltaic modules manually in conventional technology.

Optionally, on the basis of the above embodiment provided by the application, step S101 of determining the present characteristic curve of each string may be implemented by following steps including step S1011 and step S1012, as shown in figure 2.

In S1011, an output current value and an output voltage of each string are obtained in turn by an inverter.

In S2012, an I-V curve of each string is determined based on the current value and the output voltage and the I-V curve is defined as the present characteristic curve.

By triggering the inverter actively, the inverter can run in an objectively permitted maximum voltage range in a monotone increasing or decreasing way, and current values at different working voltages of each string are collected in turn by a sampling circuit. The voltage values and current values in one-to-one correspondence are stored in an upper computer in a form of data points, and waits to be processed as a data source of the upper computer.

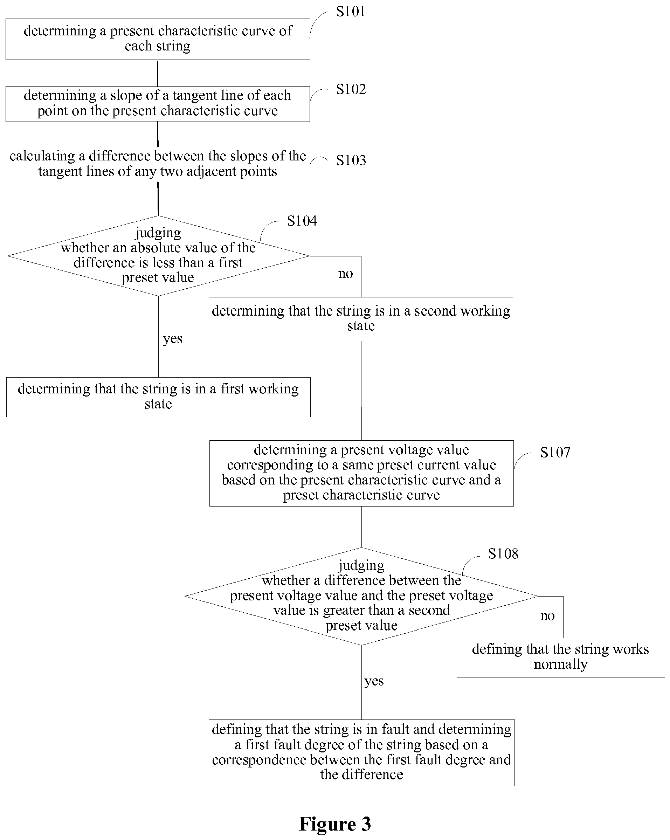

Optionally, in order to optimize the accuracy of the fault identification, the method in the embodiment further includes step S107 and step S108, after determining that the string in the second working state, as shown in figure 3.

In S107, a present voltage value corresponding to a same preset current value is determined based on the present characteristic curve.

In S108, it is judged whether a difference between the present voltage value and a preset voltage value is greater than a second preset value, it is defined that the string is in fault and a first fault degree of the string is determined based on a correspondence between the first fault degree and the difference in a case that the difference is greater than the second preset value, and it is defined that the string works normally in a case that the difference is not greater than the second preset value.

The judgment basis is as follows:
obtaining voltage values Vi (i=1, 2, 3...n) corresponding to a current value I on the I-V curves of different strings, and comparing the voltage values one by one, where $V_1$ is the maximum voltage value on the characteristic curve;

$$e_i = V_1 - V_{i\ (i=2,3...n)}$$

when $|e_{i\ (i=2,3....n)}| \leq \delta (\delta \geq 0$ and very small), determining that there is no shield or the shielding area is very small for the string;

when $|e_{i\ (i=2,3...n)}| > \delta$, determining that there is a shield for the string, and the larger the value of $|e_{i\ (i=2,3...n)}|$ is, the larger the shielding area of the string is.

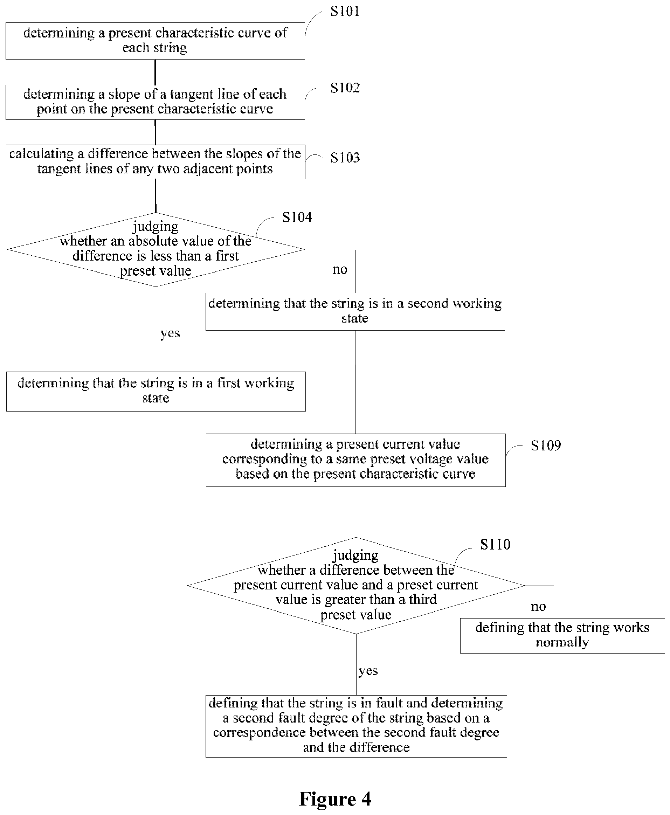

Optionally, the method further includes step S109 and step S110, after determining that the string in the second working state, as shown in figure 4.

In S109, a present current value corresponding to a same preset voltage value is determined based on the present characteristic curve.

In S110, it is judged whether a difference between the present current value and a preset current value is greater than a third preset value, it is defined that the string is in fault and a second fault degree of the string is determined based on a correspondence between the second fault degree and the difference in a case that the difference is greater than the third preset value, and it is defined that the string works normally in a case that the difference is not greater than the third preset value.

The judgment basis is as follows:
obtaining current values Ii (i=1, 2, 3...n) corresponding to a current value V on the I-V curves of different strings and comparing the current values one by one, where $I_1$ is the maximum current value on the characteristic curve;

$$e_i = I_1 - I_{i\ (i=2,3...n)}$$

when $|e_{i\ (i=2,3...n)}| \leq \delta (\delta \geq 0$ and very small), determining that there is no shield or the illumination shielding severity for the string is low;

when $|e_{i\ (i=2,3...n)}| > \delta$, determining that there is a shield for the string, and the larger the value of $|e_{i\ (i=2,3...n)}|$ is, the higher the shielding severity of the string is.

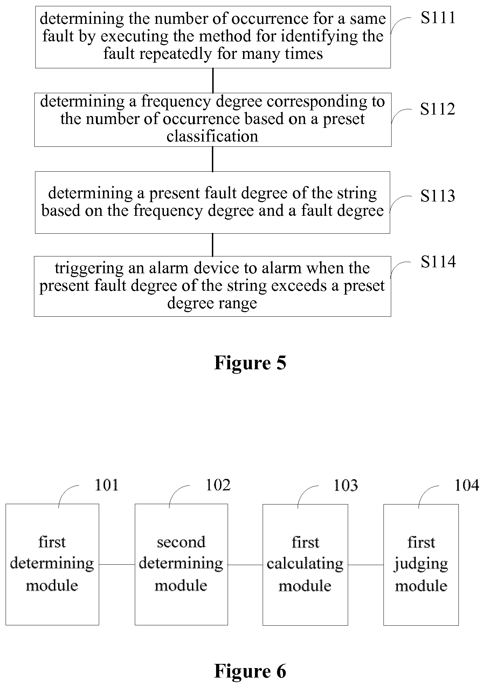

Optionally, the method further includes step S111 and step S112, after determining that the string in the second working state, as shown in figure 5.

In Sill, the number of occurrence for a same fault is determined by executing the method for identifying the fault repeatedly for many times.

In S112, a frequency degree corresponding to the number of occurrence is determined based on a preset classification.

In particular, the step may be as follows.

1) Fault determination is performed for m times, and the number of occurrence for the fault with a same type is detected. In a case that the number is less than n1, it is determined that the occurrence frequency is low. In a case that the number is not less than n1 and less than n2, it is determined that the occurrence frequency is middle. In a case that the number is not less than n2, it is determined that the occurrence frequency is high (m>n2>n1>0). Alternatively,

2) the number of occurrence for the fault with a same type is detected continuously. In a case that the number is less than n1, it is determined that the occurrence frequency is low. In a case that the number is not less than n1 and less than n2, it is determined that the occurrence frequency is middle. In a case that the number is not less than n2, it is determined that the occurrence frequency is high (n2>n1>0).

In addition, the method may further include step S113 and step S114.

In S113, a present fault degree of the string is determined based on the frequency degree and a fault degree, where the fault degree includes at least the first fault degree and the second fault degree.

In S114, an alarm device is triggered to alarm when the present fault degree of the string exceeds a preset degree range.

Firstly, the upper computer should record continuously and store data of the strings for a long period. Then, the current fault degree of the string is determined based on the frequency degree and the fault degree. In particular, the determination of the current fault degree may be achieved by intersecting the first fault degree and the second fault degree. For example, the first fault degree is a horizontal axis and the second fault degree is a vertical axis, the fault severity such as a light degree, a middle degree and a heavy degree of the present fault degree is determined based on a location of the present fault degree in the coordinate axes. The low degree indicates a small shielding area and a low illumination shielding degree. The middle degree indicates a large shielding area or a high illumination shielding degree. The heavy degree indicates a large shielding area and a high illumination shielding degree.

Thus, in the method for identifying the fault provided by this application, the practical situation and the realistic requirements of a photovoltaic power station are considered. A fault is classified after the fault is identified, and alarm and automatic processing are only performed for the fault meeting certain severity requirement, to ensure stability and reliability of the system.

The method is described in the above embodiments provided by the application, and the method of the application may be realized by a variety of apparatuses. Therefore, an apparatus is further provided by the application. Hereinafter, a particular embodiment is given to describe the apparatus in details.

Figure 6 is a schematic structural diagram of an apparatus for identifying a fault of a photovoltaic string provided by an embodiment, which includes a first determining module 101, a second determining module 102, a first calculating module 103 and a first judging module 104.

The first determining module 101 is configured to determine a present characteristic curve of each string.

The second determining module 102 is configured to determine a slope of a tangent line of each point on the present characteristic curve.

The first calculating module 103 is configured to calculate a difference between the slopes of the tangent lines of any two adjacent points.

The first judging module 104 is configured to judge whether an absolute value of the difference is less than a first preset value, determine that the string is in a first working state in a case that the absolute value is less than the first preset value, and determine that the string is in a second working state in a case that the absolute value is not less than the first preset value, where the first working state includes a normal working state and the second working state includes a fault state.

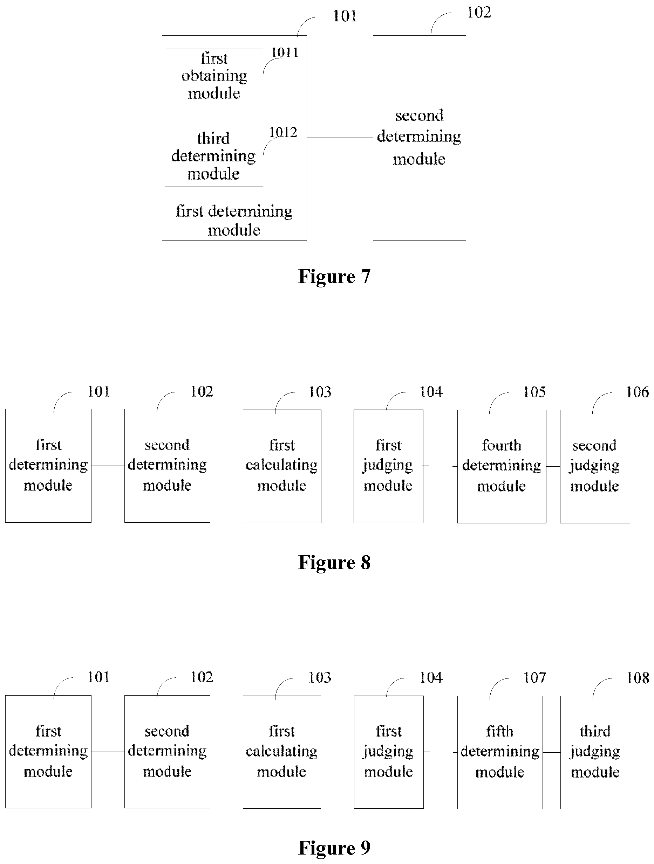

Optionally, as shown in figure 7, the first determining module 101 includes a first obtaining module 1011 and a third determining module 1012.

The first obtaining module 1011 is configured to obtain an output current value and an output voltage of each string.

The third determining module 1012 is configured to determine an I-V curve of each string based on the current value and the output voltage and defines the I-V curve as the present characteristic curve.

Optionally, as shown in figure 8, the apparatus further includes a fourth determining module 105 and a second judging module 106.

The fourth determining module 105 is configured to determine a present voltage value corresponding to a same preset current value based on the present characteristic curve.

The second judging module 106 is configured to judge whether a difference between the present voltage value and a preset voltage value is greater than a second preset value, define that the string is in fault and determine a first fault degree of the string based on a correspondence between the first fault degree and the difference in a case that the difference is greater than the second preset value, and define that the string works normally in a case that the difference is not greater than the second preset value.

Optionally, as shown in figure 9, the apparatus further includes a fifth determining module 107 and a third judging module 108.

The fifth determining module 107 is configured to determine a present current value corresponding to a same preset voltage value based on the present characteristic curve.

The third judging module 108 is configured to judge whether a difference between the present current value and a preset current value is greater than a third preset value, define that the string is in fault and determine a second fault degree of the string based on a correspondence between the second fault degree and the difference in a case that the difference is greater than the third preset value, and define that the string works normally in a case that the difference is not greater than the third preset value.

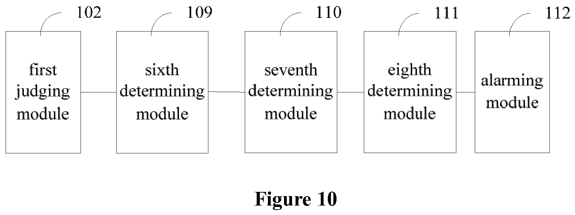

Optionally, as shown in figure 10, the apparatus further includes a sixth determining module 109, a seventh determining module 110, an eighth determining module 111 and an alarming module 112.

The sixth determining module 109 is configured to determine the number of occurrence for a same fault by executing the method for identifying the fault repeatedly for many times.

The seventh determining module 110 is configured to determine a frequency degree corresponding to the number of occurrence based on a preset classification.

The eighth determining module 111 is configured to determine a present fault degree of the string based on the frequency degree and a fault degree, where the fault degree includes at least the first fault degree and the second fault degree.

The alarming module 112 is configured to trigger an alarm device to alarm when the present fault degree of the string exceeds a preset degree range.

In addition, a system for identifying a fault of a photovoltaic string is provided by an embodiment, which includes any above apparatus for identifying the fault of the photovoltaic string.

It should be noted that the method embodiment can be referred to, to explain the working principle of the apparatus and system, and the description is omitted herein.

Above all, the application provides a method for identifying a fault of a photovoltaic string, which includes: determining a present characteristic curve of each string, then determining a slope of a tangent line of each point on the present characteristic curve and calculating a difference between the slopes of the tangent lines of any two adjacent points. Then it is judged whether an absolute value of the difference is less than a first preset value. In a case that the absolute value is less than the first preset value, it is determined that the string is in a first working state. In a case that the absolute value is not less than the first preset value, it is determined that the string is in a second working state. The first working state includes a normal working state and the second working state includes a fault state. Thus, with the method for identifying the fault of the photovoltaic string provided by this application, it can be automatically determined whether a fault occurs in each string and thus a fault degree, thereby effectively solving the problems of heavy workload and low efficiency caused by monitoring photovoltaic modules manually in conventional technology.

The various embodiments in the application are described progressively. Each embodiment focuses on the difference from other embodiments. The same or similar parts of the various embodiments can be referred to mutually. The apparatus provided by the embodiment is described simply since it corresponds to the method provided by the embodiment, and part of the method description can be referred to, to explain the corresponding parts of the apparatus.

**Claims**

1. A method for identifying a fault of a photovoltaic string, comprising:

   determining (S101) a present current-voltage characteristic curve of each string;
   determining (S102) a slope of a tangent line of each point on the present current-voltage characteristic curve;
   calculating (S103) a difference between the slopes of the tangent lines of any two adjacent points;
   judging (S104) whether an absolute value of the difference is less than a first preset value;
   determining (S105) that the string is in a first working state in a case that the absolute value is less than the first preset value; and
   determining (S106) that the string is in a second working state in a case that the absolute value is not less than the first preset value,
   wherein the first working state comprises a normal working state and the second working state comprises a fault state.

2. The method for identifying the fault of the photovoltaic string according to claim 1, wherein determining the present current-voltage characteristic curve of each string comprises:
   obtaining (S1011), by an inverter, an output current value and an output voltage of each string in turn; and determining (S1012) an I-V curve of each string based on the output current value and the output voltage and defining the I-V curve as the present current-voltage characteristic curve.

3. The method for identifying the fault of the photovoltaic string according to claim 1, wherein after determining that the string is in the second working state, the method further comprises:

   determining (S107) a present voltage value corresponding to a preset current value based on the present current-voltage characteristic curve; and
   judging (S108) whether a difference between the present voltage value and a preset voltage value is greater than a second preset value, defining that the string is in fault and determining a first fault degree of the string based on a correspondence between the first fault degree and the difference in a case that the difference is greater than the second preset value, and defining that the string works normally in a case that the difference is not greater than the second preset value.

4. The method for identifying the fault of the photovoltaic string according to claim 3, wherein the method further comprises:

   determining (S109) a present current value corresponding to a same preset voltage value based on the present current-voltage characteristic curve; and
   judging (S110) whether a difference between the present current value and a preset current value is greater than a third preset value, defining that the string is in fault and determining a second fault degree of the string based on a correspondence between the second fault degree and the difference in a case that the difference is greater than the third preset value, and defining that the string works normally in a case that the difference is not greater than the third preset value.

5. The method for identifying the fault of the photovoltaic string according to claim 4, wherein after determining that the string is in the second working state, the method further comprises:

   determining (S111) the number of occurrence for a same fault by executing the method for identifying the fault repeatedly for many times;
   determining (S112) a frequency degree corresponding to the number of occurrence based on a preset classification;

determining (S113) a present fault degree of the string based on the frequency degree and a fault degree, wherein the fault degree comprises at least the first fault degree and the second fault degree; and

triggering (S114) an alarm device to alarm when the present fault degree of the string exceeds a preset degree range.

6. An apparatus for identifying a fault of a photovoltaic string, comprising:

a first determining module (101) configured to determine a present current-voltage characteristic curve of each string;
a second determining module (102) configured to determine a slope of a tangent line of each point on the present current-voltage characteristic curve;
a first calculating module (103) configured to calculate a difference between the slopes of the tangent lines of any two adjacent points; and
a first judging module (104) configured to judge whether an absolute value of the difference is less than a first preset value, determine that the string is in a first working state in a case that the absolute value is less than the first preset value, and determine that the string is in a second working state in a case that the absolute value is not less than the first preset value, wherein the first working state comprises a normal working state and the second working state comprises a fault state.

7. The apparatus for identifying the fault of the photovoltaic string according to claim 6, wherein the first determining module comprises:

a first obtaining module (1011) configured to obtain an output current value and an output voltage of each string; and
a third determining module (1012) configured to determine an I-V curve of each string based on the current value and the output voltage and define the I-V curve as the present current-voltage characteristic curve.

8. The apparatus for identifying the fault of the photovoltaic string according to claim 6, wherein the apparatus further comprises:

a fourth determining module (105) configured to determine a present voltage value corresponding to a same preset current value based on the present current-voltage characteristic curve; and
a second judging module (106) configured to judge whether a difference between the present voltage value and a preset voltage value is greater than a second preset value, define that the string is in fault and determine a first fault degree of the string based on a correspondence between the first fault degree and the difference in a case that the difference is greater than the second preset value, and define that the string works normally in a case that the difference is not greater than the second preset value.

9. The apparatus for identifying the fault of the photovoltaic string according to claim 6, wherein the apparatus further comprises:

a fifth determining module (107) configured to determine a present current value corresponding to a same preset voltage value based on the present current-voltage characteristic curve; and
a third judging module (108) configured to judge whether a third absolute value of a third difference between the present current value and a preset current value is greater than a third preset value, define that the string is in fault and determine a second fault degree of the string based on a correspondence between the second fault degree and the third absolute value in a case that the third absolute value is greater than the third preset value, and define that the string works normally in a case that the third absolute value is not greater than the third preset valuer

10. The apparatus for identifying the fault of the photovoltaic string according to claim 9, wherein the apparatus further comprises:

a sixth determining module (109) configured to determine the number of occurrence for a same fault by executing the method for identifying the fault repeatedly for many times;
a seventh determining module (110) configured to determine a frequency degree corresponding to the number of occurrence based on a preset classification;
an eighth determining module (111) configured to determine a present fault degree of the string based on the frequency degree and a fault degree, wherein the fault degree comprises at least the first fault degree and the second fault degree; and
an alarm module (112) configured to trigger an alarm device to alarm when the present fault degree of the string exceeds a preset degree range.

11. A system for identifying a fault of a photovoltaic string, comprising the apparatus for identifying the fault of the photovoltaic string according to any one of claims 6 to 10.

**Patentansprüche**

1. Verfahren zum Identifizieren eines Fehlers eines Fotovoltaik-Strings, umfassend:

   Bestimmen (S101) einer aktuellen Strom-Spannungs-Kennlinie eines jeden Strings;
   Bestimmen (S102) einer Steigung einer Tangentenlinie eines jeden Punkts auf der aktuellen Strom-Spannungs-Kennlinie;
   Berechnen (S103) eines Unterschieds zwischen den Steigungen der Tangentenlinien zweier beliebiger benachbarter Punkte;
   Beurteilen (S104), ob ein absoluter Wert des Unterschieds geringer ist als ein erster vorgegebener Wert;
   Bestimmen (S105), dass sich der String in einem ersten Arbeitszustand befindet, wenn der absolute Wert geringer als der erste vorgegebene Wert ist; und
   Bestimmen (S106), dass sich der String in einem zweiten Arbeitszustand befindet, wenn der absolute Wert nicht geringer als der erste vorgegebene Wert ist,
   wobei der erste Arbeitszustand einen normalen Arbeitszustand umfasst und der zweite Arbeitszustand einen Fehlerzustand umfasst.

2. Verfahren zum Identifizieren des Fehlers des Fotovoltaik-Strings nach Anspruch 1, wobei das Bestimmen der aktuellen Strom-Spannungs-Kennlinie eines jeden Strings Folgendes umfasst:

   Erhalten (S1011) eines Ausgangsstromwerts und einer Ausgangsspannung eines jeden Strings nacheinander, durch einen Inverter; und
   Bestimmen (S1012) einer I-V-Kurve eines jeden Strings basierend auf dem Ausgangsstromwert und der Ausgangsspannung, und Definieren der I-V-Kurve als die aktuelle Strom-Spannungs-Kennlinie.

3. Verfahren zum Identifizieren des Fehlers des Fotovoltaik-Strings nach Anspruch 1, wobei das Verfahren nach dem Bestimmen, dass sich der String in dem zweiten Arbeitszustand befindet, Folgendes umfasst:

   Bestimmen (S107) eines einem vorgegebenen Stromwert entsprechenden aktuellen Spannungswerts basierend auf der aktuellen Strom-Spannungs-Kennlinie; und
   Beurteilen (S108), ob ein Unterschied zwischen dem aktuellen Spannungswert und einem vorgegebenen Spannungswert größer ist als ein zweiter vorgegebener Wert, Definieren, dass der String einen Fehler aufweist, und Bestimmen eines ersten Fehlergrads des Strings basierend auf einer Übereinstimmung zwischen dem ersten Fehlergrad und dem Unterschied, wenn der Unterschied größer als der zweite vorgegebene Wert ist, und Definieren, dass der String normal arbeitet, wenn der Unterschied nicht größer als der zweite vorgegebene Wert ist.

4. Verfahren zum Identifizieren des Fehlers des Fotovoltaik-Strings nach Anspruch 3, wobei das Verfahren ferner Folgendes umfasst:

   Bestimmen (S109) eines demselben vorgegebenen Spannungswert entsprechenden aktuellen Stromwerts basierend auf der aktuellen Strom-Spannungs-Kennlinie; und
   Beurteilen (S110), ob ein Unterschied zwischen dem aktuellen Stromwert und einem vorgegebenen Stromwert größer ist als ein dritter vorgegebener Wert, Definieren, dass der String einen Fehler aufweist, und Bestimmen eines zweiten Fehlergrads des Strings basierend auf einer Übereinstimmung zwischen dem zweiten Fehlergrad und dem Unterschied, wenn der Unterschied größer als der dritte vorgegebene Wert ist, und Definieren, dass der String normal arbeitet, wenn der Unterschied nicht größer als der dritte vorgegebene Wert ist.

5. Verfahren zum Identifizieren des Fehlers des Fotovoltaik-Strings nach Anspruch 4, wobei das Verfahren nach dem Bestimmen, dass sich der String im zweiten Arbeitszustand befindet, Folgendes umfasst:

   Bestimmen (S111) der Anzahl des Auftretens eines gleichen Fehlers durch vielmalig wiederholtes Ausführen des Verfahrens zum Identifizieren des Fehlers;
   Bestimmen (S112) eines der Anzahl des Auftretens entsprechenden Häufigkeitsgrads basierend auf einer vorgegebenen Klassifikation;
   Bestimmen (S113) eines aktuellen Fehlergrads des Strings basierend auf dem Häufigkeitsgrad und einem Fehlergrad, wobei der Fehlergrad zumindest den ersten Fehlergrad und den zweiten Fehlergrad umfasst; und
   Auslösen (S114) einer Alarmvorrichtung, um einen Alarm auszugeben, wenn der aktuelle Fehlergrad des Strings einen vorgegebenen Gradbereich überschreitet.

6. Anordnung zum Identifizieren eines Fehlers eines Fotovoltaik-Strings, umfassend:

ein erstes Bestimmungsmodul (101), das zum Bestimmen einer aktuellen Strom-Spannungs-Kennlinie eines jeden Strings ausgebildet ist;
ein zweites Bestimmungsmodul (102), das zum Bestimmen einer Steigung einer Tangentenlinie eines jeden Punkts auf der aktuellen Strom-Spannungs-Kennlinie ausgebildet ist;
ein erstes Berechnungsmodul (103), das zum Berechnen eines Unterschieds zwischen den Steigungen der Tangentenlinien zweier beliebiger benachbarter Punkte ausgebildet ist; und
ein erstes Beurteilungsmodul (104), das dazu ausgebildet ist zu beurteilen, ob ein absoluter Wert des Unterschieds geringer ist als ein erster vorgegebener Wert, zu bestimmen, dass sich der String in einem ersten Arbeitszustand befindet, wenn der absolute Wert geringer als der erste vorgegebene Wert ist, und zu bestimmen, dass sich der String in einem zweiten Arbeitszustand befindet, wenn der absolute Wert nicht geringer als der erste vorgegebene Wert ist, wobei der erste Arbeitszustand einen normalen Arbeitszustand umfasst und der zweite Arbeitszustand einen Fehlerzustand umfasst.

7. Anordnung zum Identifizieren des Fehlers des Fotovoltaik-Strings nach Anspruch 6, wobei das erste Bestimmungsmodul Folgendes umfasst:

ein erstes Erhaltungsmodul (1011), das zum Erhalten eines Ausgangsstromwerts und einer Ausgangsspannung eines jeden Strings ausgebildet ist; und
ein drittes Bestimmungsmodul (1012), das zum Bestimmen einer I-V-Kurve eines jeden Strings, basierend auf dem Stromwert und der Ausgangsspannung, und zum Definieren der I-V-Kurve als die aktuelle Strom-Spannungs-Kennlinie ausgebildet ist.

8. Anordnung zum Identifizieren des Fehlers des Fotovoltaik-Strings nach Anspruch 6, wobei die Anordnung ferner Folgendes umfasst:

ein viertes Bestimmungsmodul (105), das zum Bestimmen eines demselben vorgegebenen Stromwert entsprechenden aktuellen Spannungswerts basierend auf der aktuellen Strom-Spannungs-Kennlinie ausgebildet ist; und
ein zweites Beurteilungsmodul (106), das dazu ausgebildet ist, zu beurteilen, ob ein Unterschied zwischen dem aktuellen Spannungswert und einem vorgegebenen Spannungswert größer ist als ein zweiter vorgegebener Wert, zu definieren, dass der String einen Fehler aufweist und einen ersten Fehlergrad des Strings zu bestimmen, basierend auf einer Übereinstimmung zwischen dem ersten Fehlergrad und dem Unterschied, wenn der Unterschied größer als der zweite vorgegebene Wert ist, und zu definieren, dass der String normal arbeitet, wenn der Unterschied nicht größer als der zweite vorgegebene Wert ist.

9. Anordnung zum Identifizieren des Fehlers des Fotovoltaik-Strings nach Anspruch 6, wobei die Anordnung ferner Folgendes umfasst:

ein fünftes Bestimmungsmodul (107), das zum Bestimmen eines demselben vorgegebenen Spannungswert entsprechenden aktuellen Stromwerts basierend auf der aktuellen Strom-Spannungs-Kennlinie ausgebildet ist; und
ein drittes Beurteilungsmodul (108), das dazu ausgebildet ist, zu beurteilen, ob ein dritter absoluter Wert eines dritten Unterschieds zwischen dem aktuellen Stromwert und einem vorgegebenen Stromwert größer ist als ein dritter vorgegebener Wert, zu definieren, dass der String einen Fehler aufweist und einen zweiten Fehlergrad des Strings zu bestimmen, basierend auf einer Übereinstimmung zwischen dem zweiten Fehlergrad und dem dritten absoluten Wert, wenn der dritte absolute Wert größer als der dritte vorgegebene Wert ist, und zu definieren, dass der String normal arbeitet, wenn der dritte absolute Wert nicht größer als der dritte vorgegebene Wert ist.

10. Anordnung zum Identifizieren des Fehlers des Fotovoltaik-Strings nach Anspruch 9, wobei die Anordnung ferner Folgendes umfasst:

ein sechstes Bestimmungsmodul (109), das zum Bestimmen der Anzahl des Auftretens eines gleichen Fehlers durch vielmalig wiederholtes Ausführen des Verfahrens zum Identifizieren des Fehlers ausgebildet ist;
ein siebtes Bestimmungsmodul (110), das zum Bestimmen eines der Anzahl des Auftretens entsprechenden Häufigkeitsgrads basierend auf einer vorgegebenen Klassifikation ausgebildet ist;
ein achtes Bestimmungsmodul (111), das zum Bestimmen eines aktuellen Fehlergrads des Strings basierend auf dem Häufigkeitsgrad und einem Fehlergrad ausgebildet ist, wobei der Fehlergrad zumindest den ersten Fehlergrad und den zweiten Fehlergrad umfasst; und
ein Alarmmodul (112), das zum Auslösen einer Alarmvorrichtung ausgebildet ist, um einen Alarm auszugeben, wenn der aktuelle Fehlergrad des Strings einen vorgegebenen Gradbereich überschreitet.

11. System zum Identifizieren eines Fehlers eines Fotovoltaik-Strings, umfassend die Anordnung zum Identifizieren des Fehlers des Fotovoltaik-Strings nach einem der Ansprüche 6 bis 10.

## Revendications

1. Procédé pour identifier une défaillance d'une chaîne photovoltaïque, comprenant :

    la détermination (S101) d'une courbe courant-tension caractéristique actuelle de chaque chaîne ;
    la détermination (S102) d'une pente d'une ligne tangente de chaque point sur la courbe courant-tension caractéristique actuelle ;
    le calcul (S103) d'une différence entre les pentes des lignes tangentes de deux points adjacents quelconques ;
    le jugement (S104) pour savoir si une valeur absolue de la différence est inférieure à une première valeur prédéfinie ;
    la détermination (S105) pour savoir si la chaîne est dans un premier état de fonctionnement dans le cas où la valeur absolue serait inférieure à la première valeur prédéfinie ; et
    la détermination (S106) pour savoir si la chaîne est dans un deuxième état de fonctionnement dans le cas où la valeur absolue ne serait pas inférieure à la première valeur prédéfinie,
    dans lequel le premier état de fonctionnement comprend un état de travail normal et le deuxième état de fonctionnement comprend un état de défaut.

2. Procédé pour identifier la défaillance de la chaîne photovoltaïque selon la revendication 1, dans lequel la détermination de la courbe courant-tension caractéristique actuelle de chaque chaîne comprend :

    l'obtention (S1011), par un inverseur, d'une valeur de courant de sortie et d'une tension de sortie de chaque chaîne à son tour ; et
    la détermination (S1012) d'une courbe I-V de chaque chaîne sur la base de la valeur de courant de sortie et de la tension de sortie et la définition de la courbe I-V comme la courbe courant-tension caractéristique actuelle.

3. Procédé pour identifier la défaillance de la chaîne photovoltaïque selon la revendication 1, dans lequel après avoir déterminé que la chaîne est dans le deuxième état de fonctionnement, le procédé comprend en outre :

    la détermination (S107) d'une valeur de tension actuelle correspondant à une valeur de courant prédéterminée basée sur la courbe courant-tension caractéristique actuelle ; et
le jugement (S108) pour savoir si une différence entre la valeur de tension actuelle et une valeur de tension prédéfinie est supérieure à une deuxième valeur prédéfinie, la définition du fait que la chaîne est en défaut et la détermination d'un premier degré de défaut de la chaîne sur la base d'une correspondance entre le premier degré de défaut et la différence dans le cas où la différence serait supérieure à la deuxième valeur prédéfinie et définissant que la chaîne fonctionne normalement dans le cas où la différence ne serait pas supérieure à la deuxième valeur prédéfinie.

4. Procédé pour identifier la défaillance de la chaîne photovoltaïque selon la revendication 3, dans lequel le procédé comprend en outre :

    la détermination (S109) d'une valeur de courant actuelle correspondant à une même valeur de tension prédéterminée basée sur la courbe courant-tension caractéristique actuelle ; et
    le jugement (S110) pour savoir si une différence entre la valeur de courant actuelle et une valeur de courant prédéfinie est supérieure à une troisième valeur prédéfinie, définissant que la chaîne est en défaut et la détermination d'un deuxième degré de défaut de la chaîne sur la base d'une correspondance entre le deuxième degré de défaut et la différence dans le cas où la différence serait supérieure à la troisième valeur prédéfinie et définissant que la chaîne fonctionne normalement dans le cas où la différence ne serait pas supérieure à la troisième valeur prédéfinie.

5. Procédé pour identifier la défaillance de la chaîne photovoltaïque selon la revendication 4, dans lequel après avoir déterminé que la chaîne est dans le deuxième état de fonctionnement, le procédé comprend en outre :

    la détermination (S111) du nombre d'occurrences pour une même faute en exécutant la méthode d'identification du défaut à plusieurs reprises pour plusieurs fois ;
    la détermination (S112) d'un degré de fréquence correspondant au nombre d'occurrences sur la base d'une classification prédéfinie ;
    la détermination (S113) d'un degré de défaut présent de la chaîne sur la base du degré de fréquence et d'un degré de défaut, le degré de défaut comprenant au moins le premier degré de défaut et le deuxième degré de défaut ; et
    le déclenchement (S114) d'un dispositif d'alarme pour déclencher une alarme lorsque le degré de défaut actuel de la chaîne dépasse une plage de degrés prédéfinie.

**6.** Dispositif pour identifier une défaillance d'une chaîne photovoltaïque, comprenant :

un premier module de détermination (101) configuré pour déterminer une courbe courant-tension caractéristique actuelle de chaque chaîne ;
un deuxième module de détermination (102) configuré pour déterminer une pente d'une ligne tangente de chaque point sur la courbe courant-tension caractéristique actuelle ;
un premier module de calcul (103) configuré pour calculer une différence entre les pentes des lignes tangentes de deux points adjacents quelconques ; et
un premier module de jugement (104) configuré pour juger si une valeur absolue de la différence est inférieure à une première valeur prédéfinie, déterminer que la chaîne est dans un premier état de fonctionnement dans le cas où la valeur absolue serait inférieure à la première valeur prédéfinie, et déterminer que la chaîne est dans un deuxième état de fonctionnement dans le cas où la valeur absolue ne serait pas inférieure à la première valeur prédéfinie, le premier état de fonctionnement comprenant un état de fonctionnement normal et le deuxième état de fonctionnement comprend un état de défaut.

**7.** Dispositif pour identifier la défaillance de la chaîne photovoltaïque selon la revendication 6, dans lequel le premier module de détermination comprend :

un premier module d'obtention (1011) configuré pour obtenir une valeur de courant de sortie et une tension de sortie de chaque chaîne ; et
un troisième module de détermination (1012) configuré pour déterminer une courbe I-V de chaque chaîne sur la base de la valeur de courant de sortie et de la tension de sortie et définir la courbe I-V comme la courbe courant-tension caractéristique actuelle.

**8.** Dispositif pour identifier la défaillance de la chaîne photovoltaïque selon la revendication 6, dans lequel le dispositif comprend en outre :

un quatrième module de détermination (105) configuré pour déterminer une valeur de courant actuelle correspondant à une même valeur de tension prédéterminée basée sur la courbe courant-tension caractéristique actuelle ; et
un deuxième module de jugement (106) configuré pour juger si une différence entre la valeur de tension actuelle et une valeur de tension prédéfinie est supérieure à une deuxième valeur prédéfinie, définir que la chaîne est en défaut et déterminer un premier degré de défaut de la chaîne sur la base d'une correspondance entre le premier degré de défaut et la différence dans le cas où la différence serait supérieure à la deuxième valeur prédéfinie et définir que la chaîne fonctionne normalement dans le cas où la différence ne serait pas supérieure à la deuxième valeur prédéfinie.

**9.** Dispositif pour identifier la défaillance de la chaîne photovoltaïque selon la revendication 6, dans lequel le dispositif comprend en outre :

un cinquième module de détermination (107) configuré pour déterminer une valeur de courant actuelle correspondant à une même valeur de tension prédéterminée basée sur la courbe courant-tension caractéristique actuelle ; et
un troisième module de jugement (108) configuré pour juger si une troisième valeur absolue d'une troisième différence entre la valeur de courant actuelle et une valeur de courant prédéfinie est supérieure à une troisième valeur prédéfinie, définir que la chaîne est en défaut et déterminer un deuxième degré de défaut de la chaîne sur la base d'une correspondance entre le deuxième degré de défaut et la troisième valeur absolue dans le cas où la troisième valeur absolue serait supérieure à la troisième valeur prédéfinie, et définir que la chaîne fonctionne normalement dans le cas où la troisième valeur absolue ne serait pas supérieure à la troisième valeur prédéfinie.

**10.** Dispositif pour identifier la défaillance de la chaîne photovoltaïque selon la revendication 9, dans lequel le dispositif comprend en outre :

un sixième module de détermination (109) configuré pour déterminer le nombre d'occurrences pour une même faute en exécutant la méthode d'identification de la faille à plusieurs reprises pour plusieurs fois ;
un septième module de détermination (110) configuré pour déterminer un degré de fréquence correspondant au nombre d'occurrences sur la base d'une classification prédéfinie ;
un huitième module de détermination (111) configuré pour déterminer un degré de défaut actuel de la chaîne sur la base du degré de fréquence et d'un degré de défaut, le degré de défaut comprenant au moins le premier degré de défaut et le deuxième degré de défaut ; et
un module d'alarme (112) configuré pour déclencher un dispositif d'alarme pour déclencher une alarme lorsque le degré de défaut actuel de la chaîne dépasse une plage de degrés prédéfinie.

**11.** Système pour identifier une défaillance d'une chaîne photovoltaïque, comprenant le dispositif pour identifier le défaut de la chaîne photovoltaïque selon l'une quelconque des revendications 6 à 10.

determining a present characteristic curve of each string — S101

determining a slope of a tangent line of each point on the present characteristic curve — S102

calculating a difference between the slopes of the tangent lines of any two adjacent points — S103

S104

judging whether an absolute value of the difference is less than a first preset value

no

S106

determining that the string is in a second working state

yes

S105

determining that the string is in a first working state

**Figure 1**

obtaining an output current value and an output voltage of each string in turn by an inverter — S1011

determining an I-V curve of each string based on the current value and the output voltage and defining the I-V curve as the present characteristic curve — S1012

**Figure 2**

determining a present characteristic curve of each string ⌐ S101

determining a slope of a tangent line of each point on the present characteristic curve ⌐ S102

calculating a difference between the slopes of the tangent lines of any two adjacent points ⌐ S103

judging whether an absolute value of the difference is less than a first preset value ⌐ S104

no

determining that the string is in a second working state

yes

determining that the string is in a first working state

determining a present voltage value corresponding to a same preset current value based on the present characteristic curve and a preset characteristic curve ⌐ S107

judging whether a difference between the present voltage value and the preset voltage value is greater than a second preset value ⌐ S108

no

defining that the string works normally

yes

defining that the string is in fault and determining a first fault degree of the string based on a correspondence between the first fault degree and the difference

**Figure 3**

S101

determining a present characteristic curve of each string

S102

determining a slope of a tangent line of each point on the present characteristic curve

S103

calculating a difference between the slopes of the tangent lines of any two adjacent points

S104

judging whether an absolute value of the difference is less than a first preset value

no

determining that the string is in a second working state

yes

determining that the string is in a first working state

S109

determining a present current value corresponding to a same preset voltage value based on the present characteristic curve

S110

judging whether a difference between the present current value and a preset current value is greater than a third preset value

no

defining that the string works normally

yes

defining that the string is in fault and determining a second fault degree of the string based on a correspondence between the second fault degree and the difference

**Figure 4**

determining the number of occurrence for a same fault by executing the method for identifying the fault repeatedly for many times ⟋ S111

determining a frequency degree corresponding to the number of occurrence based on a preset classification ⟋ S112

determining a present fault degree of the string based on the frequency degree and a fault degree ⟋ S113

triggering an alarm device to alarm when the present fault degree of the string exceeds a preset degree range ⟋ S114

**Figure 5**

⟋ 101   ⟋ 102   ⟋ 103   ⟋ 104

| first determining module | second determining module | first calculating module | first judging module |

**Figure 6**

**Figure 7**

**Figure 8**

**Figure 9**

**Figure 10**

**REFERENCES CITED IN THE DESCRIPTION**

**Patent documents cited in the description**

- CN 201310755460

- WO 2013170422 A